Europäisches Patentamt

European Patent Office

Office européen des brevets

(19)

(11) Veröffentlichungsnummer: **0 035 657**
**B1**

(12) **EUROPÄISCHE PATENTSCHRIFT**

(45) Veröffentlichungstag der Patentschrift:
27.07.83

(51) Int. Cl.³: **A 01 D 55/18**

(21) Anmeldenummer: 81100931.5

(22) Anmeldetag: 11.02.81

(54) Rasenmäher oder dgl. mit rotierendem Schneidfaden.

(30) Priorität: 16.02.80 DE 3005807

(43) Veröffentlichungstag der Anmeldung:
16.09.81 Patentblatt 81/37

(45) Bekanntmachung des Hinweises auf die Patenterteilung:
27.07.83 Patentblatt 83/30

(84) Benannte Vertragsstaaten:
AT BE CH DE FR GB IT LI LU NL SE

(56) Entgegenhaltungen:
DE-A-2 023 391
FR-A-2 361 050
FR-A-2 372 585
GB-A-1 551 622

(73) Patentinhaber: GARDENA Kress + Kastner GmbH,
Lichernseestrasse 40, D-7900 Ulm/Donau (DE)

(72) Erfinder: Katzer, Johann, Nebelhornweg 9,
D-7910 Neu-Ulm (DE)
Erfinder: Sauer, Roland, Gersterstrasse 41,
D-7900 Ulm-Gögglingen (DE)
Erfinder: Stephany, Christian, Biberacher Strasse 76,
D-7900 Ulm-Wiblingen (DE)
Erfinder: Lopic, Franz, Marienstrasse 8,
D-7911 Neu-Ulm-Burlafingen (DE)

(74) Vertreter: Patentanwälte Ruff und Beier,
Neckarstrasse 50, D-7000 Stuttgart 1 (DE)

## Rasenmäher oder dergleichen mit rotierendem Schneidfaden

Die Erfindung betrifft einen Rasenmäher oder dergleichen mit rotierendem Schneidfasen, bei dem ein eine Spule mit einem darauf aufgewickelten Schneidfaden aufweisender Schneidkopf von einem Drehantrieb antreibbar ist, wobei das äußere Ende des Schneidfadens zusammen mit dem Schneidkopf frei rotiert und an der Unterseite eine Abdeckung angebracht ist.

Aus der DE-A-2 023 391 ist ein derartiger Rasenmäher bekanntgeworden, dessen Abdeckung an einem im Schneidkopf in Kugellagern gelagerten Achsstumpf angebracht ist. Diese Abdeckung soll zwar stillstehen, wenn sie auf dem Boden aufliegt, sie kann sich aber wegen der Lagerreibung mit dem Schneidkopf drehen, so daß Verletzungsgefahr besteht, insbesondere, wenn durch eingedrungenes Schnittgut das Lager oder der Zwischenraum zwischen Schneidkopf und Abdeckung blockiert ist. Die Entfernung von Verschmutzungen und der Zugang zum Schneidkopf erfordert ein Abschrauben der Abdeckung mit einem Werkzeug, was besonders schwierig ist, weil sich die Abdeckung dabei mitzudrehen sucht.

Der Erfindung liegt die Aufgabe zugrunde, einen Rasenmäher oder dergleichen der eingangs genannten Art dahingehend zu verbessern, daß der Schneidkopf leicht zugänglich und zu reinigen ist und von der Abdeckung keine Unfallgefahr ausgeht.

Zur Lösung dieser Aufgabe schlägt die Erfindung einen Rasenmäher der eingangs genannten Art vor, bei dem die Abdeckung seitlich außerhalb des Fadenkreises abschwenkbar befestigt ist und den Schneidkopf in Richtung auf die gegenüberliegende Seite der Befestigung etwas überragt.

Es ist natürlich bei der Befestigung der Abdeckung darauf zu achten, daß die Befestigung den Betrieb des Fadenschneiders nicht behindert. Daher müssen die Befestigungsteile zwischen dem Fadenschneider und der Abdeckung außerhalb des Kreises angeordnet sein, den das freie Ende des Schneidfadens beschreibt. Außerdem muß in diesem Bereich ein vertikaler Abstand zwischen der Unterseite des Fadenschneiders und der Abdeckung vorhanden sein, damit sich der Faden drehen kann. Selbstverständlich muß auch zumindest ein Teil des von dem Schneidfaden beschriebenen Kreises seitlich aus dem Gerät heraustreten können, damit überhaupt ein Schneiden stattfinden kann.

Die Abdeckung muß dabei mit Hilfe der einseitigen Befestigung derart fest sein, daß sie nach Art einer Kufe den Fadenschneider tragen kann. Bei dieser Art der einseitigen Befestigung steht der gesamte vordere und seitliche Bereich des Fadenschneiders zum Schneiden zur Verfügung. Andererseits sorgt die Tatsache, daß die Abdeckung den Schneidkopf etwas überragt, dafür, daß ein Abreißen des Schneidfadens bei Auftreffen auf einen harten Gegenstand zwar zu einem Abscheren des Schneidfadens führen kann, daß diese Stelle aber etwas außerhalb des Schneidkopfes liegt. Damit kann es angefaßt und der Faden ohne Auseinandernehmen des Schneidkopfes herausgezogen werden.

Um die Abstützeigenschaften der einseitigen Befestigung nicht zu stark zu beanspruchen, schlägt die Erfindung in weitere Ausgestaltung vor, daß die Abdeckung an ihrer Oberseite eine Abstützung aufweist, die in axialer Verlängerung der ggf. verstärkten Spitze des Schneidkopfes liegt. Diese Abstützung kann beispielsweise ein Metallbolzen sein, auf dem die Spitze des Schneidkopfes mit möglichst wenig Reibung rotiert. Diese Abstüzung ist natürlich auch dann sinnvoll, wenn nicht nur eine seitliche Befestigung der Abdeckung vorhanden ist.

In Weiterbildung sieht die Erfindung vor, daß die Abdeckung mit einem Scharnier befestigt ist. Mit Hilfe dieses Scharnieres wird es möglich, zum Auswechseln der Spule mit dem Schneidfaden die Abdeckung wegzuklappen, so daß ein ungehinderter Zugang zu dem Schneidkopf ermöglicht wird.

Die Erfindung schlägt weiterhin vor, daß die Abdeckung einen Anschlag aufweist, der die Verschwenkbarkeit der Abdeckung mit Hilfe des Scharnieres in der Betriebsstellung der Abdeckung begrenzt. Damit wird auch hier erreicht, daß die Abdeckung nach Art einer Kufe auch ohne zusätzliche Abstützung den Fadenschneider tragen kann.

Um zu verhindern, daß beim Hochnehmen des Rasenmähers die Abdeckung herunterklappt, sieht die Erfindung weiterhin vor, daß die Abdeckung in ihrer Betriebsstellung einrastbar gehaltert ist.

Um ein besonders leichtes Führen des Rasenmähers sowie eine gute Schneidleistung zu gewährleisten, ist nach einem weiteren Merkmal der Erfindung vorgesehen, daß die Unterseite der Abdeckung eine i. w. ebene, ggf. kufenartig profilierte Fläche mit seitlichen Abrundungen aufweist. Dabei bildet diese ebene Fläche mit der durch den frei rotierenden Schneidfaden definierten Ebene vorzugsweise einen Winkel von etwa 5 bis 10°. Durch diese Einrichtung wird dafür gesorgt, daß der frei rotierende Schneidfaden unter dem genannten Winkel gegenüber dem Gras verläuft. Es hat sich nämlich herausgestellt, daß bei Auftreffen des Schneidfadens auf das Gras dieser etwas nach oben ausgelenkt wird. Wird daher der Rasenmäher mit Hilfe der ebenen Fläche auf der Unterseite der Abdeckung geführt, so wird automatisch die richtige Winkelstellung des Schneidfadens hergestellt.

Wenn der Rasenmäher eine Weiterschalteinrichtung aufweist, die durch Druck auf den Schneidkopf zur stückweisen Verlängerung des Schneidfadens betätigbar ist, so schlägt die Erfindung in Weiterbildung vor, daß der Rasenmäher eine ggf. mit Gummi belegte Fußdruckplatte enthält. Dadurch gestaltet sich das bei Abnutzung des Fadens erforderliche Weiterschalten besonders einfach, da der Bediener des Gerätes während des Betriebes nur kurz mit dem Fuß auf diese Fußdruckplatte auftritt, wodurch ein Druck auf den Schneidkopf ausgeübt wird, der zur Verlängerung des Schneidfadens führt.

Weitere Merkmale, Einzelheiten und Vorzüge der Erfindung ergeben sich aus der folgenden Beschreibung einer bevorzugten Ausführungsform der Erfindung sowie anhand der Zeichnung. Hierbei zeigen:

Fig. 1 einen Längsschnitt durch einen erfindungsgemäß ausgestalteten Rasenmäher;

Fig. 2 eine Aufsicht auf den Rasenmäher nach Fig. 1.

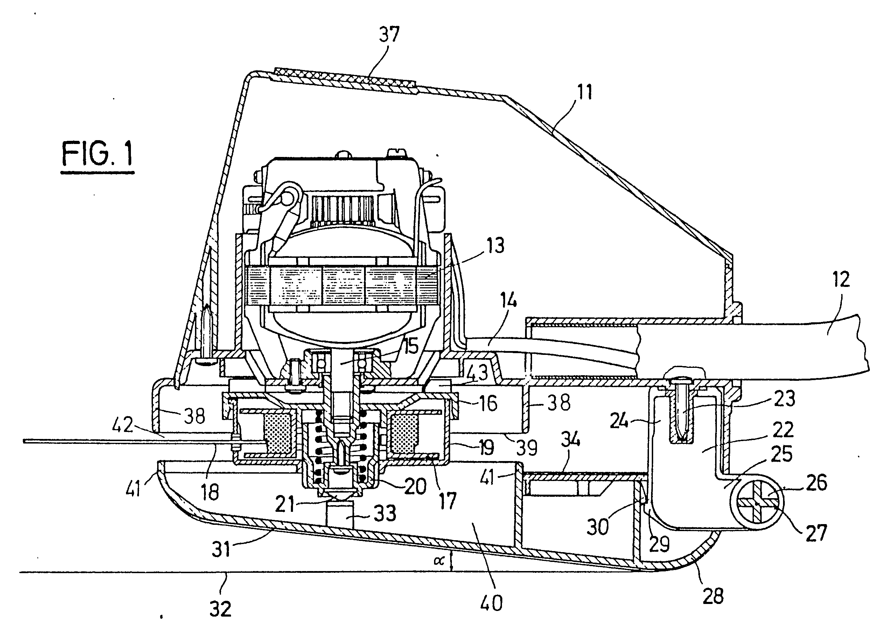

Der in den Figuren dargestellte Rasenmäher besitzt ein Gehäuse 11, an dessen in der Figur 1 rechter Seite ein Hohlstiel 12 angebracht ist. Im linken Teil des Gehäuses 11 befindet sich ein Elektromotor 13, der über eine Leitung 14 mit Strom versorgt wird. Diese Leitung verläuft im dargestellten Ausführungsbeispiel durch das Innere des Hohlstieles 12. Die Motorwelle 15 trägt an ihrer Unterseite einen Schneidkopf 16, der eine Spule 17 mit einem darauf aufgewickelten Schneidfaden 18 enthält. Die Spule 17 ist in einer Kassette 19 angeordnet, wobei eine in Verlängerung der Welle 15 angeordnete Drehhülse 20 durch eine Öffnung in der Kassette nach unten herausragt. Das untere Ende der Drehhülse 20 ist mit einem nach unten konvex gebogenen Stützteil 21 versehen. Zwischen der Drehhülse 20 und der Spule 17 ist eine Weiterschalteinrichtung vorgesehen, die ein stückweises Verlängern des Schneidfadens 18 während der Rotation des Schneidkopfes 16 ermöglicht. Diese Weiterschalteinrichtung wird durch Verschieben der unter Federwirkung stehenden Drehhülse 20 nach oben und anschließendes Wiederloslassen dieser Hülse betätigt.

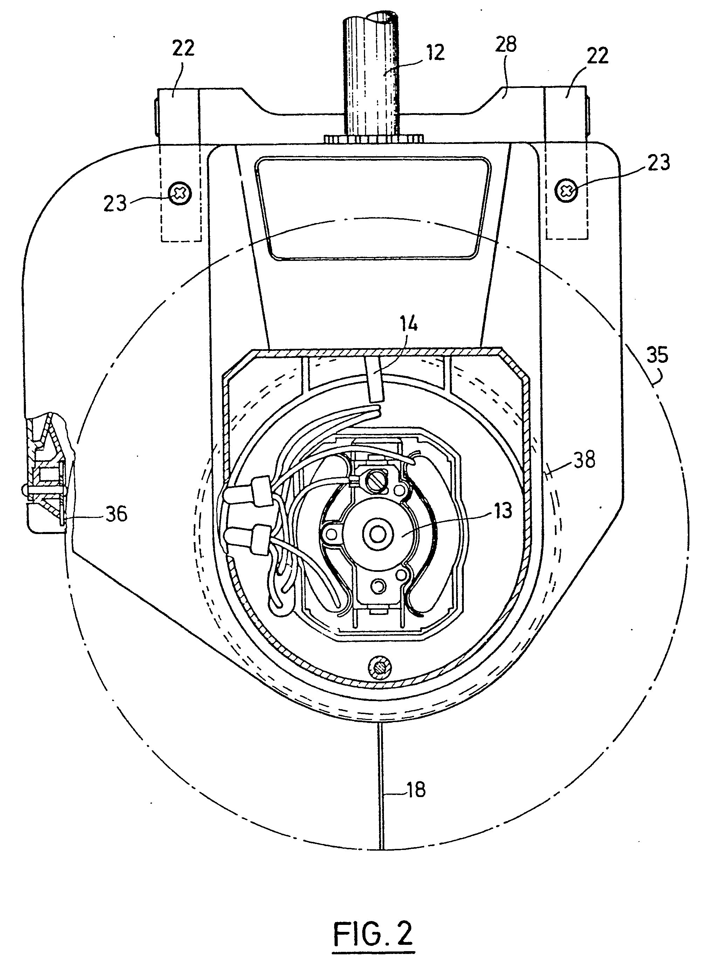

In dem in Fig. 1 rechten Teil des Gehäuses sind an der Unterseite zwei Kufenlager 22 mit Hilfe einer Schraube 23 festgeschraubt, siehe auch Fig. 2. Beide Kufenlager 22 sind etwa L-förmig ausgestaltet, wobei der längere Schenkel 24 etwa senkrecht und der kürzere Schenkel 25 etwa waagrecht verläuft, wobei das Ende des kürzeren Schenkels 25 nach rechts herausgeführt ist. Das Ende des kürzeren Schenkels 25 enthält eine horizontal verlaufende Bohrung 26. In diese Bohrungen 26 sind Lagerzapfen 27 einer Abdeckung 28 eingesetzt, wobei die Lagerzapfen 27 einen kreuzförmigen Querschnitt mit gleichlangen Schenkeln aufweisen. Mit Hilfe dieser Lagerzapfen 27 ist die Abdeckung 28 verschwenkbar. Die Kufenlager 22 weisen an ihrer dem kürzeren Schenkel 25 entgegengesetzten Seite eine Nase 29 auf, hinter die ein an der Abdeckung 28 angeordneter Vorsprung 30 eingreift, wenn die Abdeckung 28 in ihre in der Fig. 1 dargestellte Betriebsstellung geklappt ist. Das Zusammenwirken des Vorsprunges 30 mit

der Nase 29 verhindert ein Abklappen der Abdeckung 28 bei Hochheben des Rasenmähers.

Die Unterseite der Abdeckung 28 bildet eine ebene Fläche 31, die mit der durch den Schneidfaden 18 gebildeten Ebene einen Winkel von etwa 5 bis etwa 10° bildet. In Fig. 1 ist parallel zum Schneidfaden 18 eine Linie 32 gezeichnet, so daß der Winkel zwischen der ebenen Fläche 31 und dem Schneidfaden 18 durch den Winkel α zwischen der ebenen Fläche 31 und der Linie 32 repräsentiert ist.

Auf ihrer Oberseite weist die Abdeckung 28 in axialer Verlängerung der Drehhülse 20 eine Abstützung 33 auf, die hier in Form eines Metallbolzens ausgebildet ist. Im Betrieb kann daher der Schneidkopf 16 rotieren, wobei das am unteren Ende der Drehhülse 20 angeordnete Stützteil 21 auf der Abstützung 33 rotiert.

Der unmittelbar vor den Kufenlagern 22 liegende Bereich der Abdeckung ist innen mit einer Abdeckplatte 34 versehen, die ein Verschmutzen dieser Bereiche verhindern soll.

Wie insbesondere aus Fig. 2 hervorgeht, befinden sich die Kufenlager 22 außerhalb des Kreises 35, der durch das freie Ende des Schneidfadens 18 gebildet wird.

Wie aus Fig. 1 und Fig. 2 hervorgeht, steht im vorderen Bereich des Rasenmähers, d. h. auf der dem Stiel 12 entgegengesetzten Seite genügend Raum zur Verfügung, in dem der Schneidfaden außerhalb des Gehäuses verläuft, so daß er hier zum Schneiden von Gras oder dergleichen eingesetzt werden kann. Auf der in Fig. 2 linken Seite ist an dem Gehäuse eine Abschereinrichtung 36 angeordnet, die dafür sorgt, daß der Schneidfaden 18 nicht zu lang ist.

Auf der Oberseite des Gehäuses 11 ist eine Fußdruckplatte 37 angeordnet. Wird während des Betriebes des Rasenmähers auf diese Platte getreten, so führt dies zu einer Verschiebung der Drehhülse 20 gegen die Wirkung der Feder, was zu einer Weiterschaltung des Schneidfadens 18 führt, während bei Loslassen und Rückfedern der Drehhülse der Schneidfaden 18 noch einmal ein Stück weitergeschaltet wird. Dies ist eine äußerst einfache Möglichkeit zur Betätigung der Weiterschalteinrichtung zur Verlängerung des Fadens.

An der Unterseite des Gehäuses 11 ist eine Schürze 38 angebracht, die konzentrisch zu dem Schneidkopf 16 ausgebildet ist. Ihr unterer Rand 39 verläuft dabei etwas oberhalb der durch den Schneidfaden 18 gebildeten Ebene. Die Schürze 38 bildet über einen Teil ihres Umfanges gleichzeitig die äußere Begrenzung des Gehäuses 11.

In der Abdeckung 28 befindet sich eine Mulde 40, deren Rand 41 ebenfalls kreiszylinderförmig ausgebildet ist. Der Rand 41 ist ebenfalls konzentrisch zu dem Schneidkopf 16 und der Schürze 38 angeordnet. Die Abstützung 33 befindet sich in der Mitte der Mulde 40. Der Rand 39 der Schürze 38 und der Rand 41 der Mulde 40 bilden einen Durchtrittsspalt 42 für den Schneidfaden 18. Der Durchtrittsspalt 42 besitzt überall die gleiche Breite.

Auf der Oberseite des Schneidkopfes 16 sind einzelne Lüfterschaufeln 43 angeordnet. Diese Lüfterschaufeln 43 bilden zusammen mit dem von der Schürze 38 und dem Rand 41 der Mulde 40 eingegrenzten Raum eine Luftförderpumpe, die Luft durch das Motorgehäuse ansaugt und durch den Durchtrittsspalt austreten läßt. Diese Pumpenwirkung wird noch durch den rotierenden Schneidfaden 18 wesentlich unterstützt, Diese Ausbildung des Raumes innerhalb des Durchtrittsspaltes 42 bewirkt nicht nur zusammen mit dem rotierenden Schneidfaden 18 eine verbesserte und verstärkte Kühlung des Motors, sondern gleichzeitig eine Reinigungswirkung des Fadenschneiders von abgeschnittenem Gras.

**Patentansprüche**

1. Rasenmäher oder dergleichen mit rotierendem Schneidfaden (18), bei dem ein eine Spule (17) mit einem darauf aufgewickelten Schneidfaden (18) aufweisender Schneidkopf (16) von einem Drehantrieb antreibbar ist, wobei das äußere Ende des Schneidfadens (18) zusammen mit dem Schneidkopf (16) frei rotiert und an der Unterseite eine Abdeckung (28) angebracht ist, dadurch gekennzeichnet, daß die Abdeckung (28) seitlich außerhalb des Fadenkreises abschwenkbar befestigt ist und den Schneidkopf (16) in Richtung auf die gegenüberliegende Seite der Befestigung etwas überragt.

2. Rasenmäher nach Anspruch 1, dadurch gekennzeichnet, daß die Abdeckung (28) an ihrer Oberseite eine Abstützung (33) aufweist, die einem in axialer Verlängerung des Zentrumes des Schneidkopfes (16) liegenden und zum Abstützen ausgebildeten, durch ein hartes Metallteil gebildeten Stützteil (21) gegenüberliegt.

3. Rasenmäher nach Anspruch 2, dadurch gekennzeichnet, daß die Abstützung (33) einen Einsatz aus verschleißfestem Material aufweist.

4. Rasenmäher nach einem der vorhergehenden Ansprüche, dadurch gekennzeichnet, daß die Abdeckung (28) mit einem Scharnier mit horizontaler Achse befestigt ist.

5. Rasenmäher nach Anspruch 4, dadurch gekennzeichnet, daß die Abdeckung (28) einen Anschlag aufweist, der ihre Verschwenkbarkeit in der Betriebsstellung begrenzt, in der sie einrastbar gehaltert ist.

6. Rasenmäher nach einem der vorhergehenden Ansprüche, dadurch gekennzeichnet, daß die Unterseite der Abdeckung (28) eine im wesentlichen ebene, gegebenenfalls kurfenartig profilierte Fläche (31) mit seitlichen Abrunden hat, die mit der durch den frei rotierenden Schneidfaden (18) definierten Ebene vorzugsweise einen Winkel ($\alpha$) von etwa 5 bis etwa 10° bildet.

7. Rasenmäher nach einem der vorhergehenden Ansprüche, mit einer durch Druck auf den Schneidkopf (16) betätigbaren Weiterschalteinrichtung zur Verlängerung des Schneidfadens (18), dadurch gekennzeichnet, daß er eine gegebenenfalls mit Gummi belegte Fußdruckplatte (37) enthält.

8. Rasenmäher nach Anspruch 7, dadurch gekennzeichnet, daß die obere Begrenzung des zwischen dem Gehäuse (11) und der Abdeckung (28) gebildeten Durchtrittsspaltes (42) von einer vorzugsweise kreiszylinderförmigen, den Schneidkopf (16) konzentrisch umgebenden Schürze (38) und seine untere Begrenzung von der vorzugsweise kreisförmig ausgebildeten Randkante (41) einer nach oben offenen Mulde (40) der Abdeckung (28) gebildet ist, wobei die obere und untere Begrenzung des Durchtrittsspaltes (42) etwa die gleiche Abmessung bzw. den gleichen Durchmesser und überall etwa den gleichen Abstand voneinander aufweisen.

9. Rasenmäher nach Anspruch 8 dadurch gekennzeichnet, daß auf der Oberseite des Schneidkopfes (16) Lüfterschaufeln (43) angeordnet sind, die zusammen mit dem von der Schürze (38) und dem Muldenrand (41) eingegrenzten Raum sowie gegebenenfalls zusammen mit dem rotierenden Schneidfaden (18) eine Luftförderpumpe bilden, wobei die Luft aus dem Durchtrittsspalt (42) austritt.

**Claims**

1. Grass cutter or the like with a rotating cutting wire (18), in which a cutter head (16) having a reel (17) with a cutting wire (18) wound thereonto can be driven by a rotary drive, the outer end of the cutting wire (18) rotating freely together with the cutter head (16) and is fitted to the bottom of a cover (18), characterized in that the cover (28) is fixed so that it can be swung laterally outside the wire circle and the cutter head (16) projects somewhat in the direction of the opposite side of the fixture.

2. Grass cutter according to claim 1, characterized in that on the top of cover (28) is provided a support (33), which faces a support member (21) formed by a hard metal part, positioned in the axial extension of the centre of the cutter head (16) and which is used for support purposes.

3. Grass cutter according to claim 2, characterized in that the support (33) has an insert made from wear-resistant material.

4. Grass cutter according to one of the preceding claims, characterized in that the cover (28) is fixed with a hinge having a horizontal axis.

5. Grass cutter according to claim 4, characterized in that the cover (28) has a stop member, which limits its pivotability in the operating position in that it lockably secures the said cover.

6. Grass cutter according to one of the preceding claims, characterized in that the bottom of cover (28) is provided with a substantially planar surface (31), optionally profiled in sledge runner-like manner and with lateral rounded portions, which form an angle ($\alpha$)

of preferably approximately 5 to approximately 10° with the olane defined by the freely rotating cutting wire (18).

7. Grass cutter according to one of the preceding claims with an indexing device operable by pressure on the cutter head (16) for extending the cutting wire (18), characterized in that it optionally contains a rubber-covered foot. pressure plate (37).

8. Grass cutter according to claim 7, characterized in that the upper boundary of the passage gap (42) formed between casing (11) and cover (28) is formed by a preferably cylindrical guard plate (38) concentrically surrounding the cutter head (16) and its lower boundary is formed by the preferably circular marginal edge (41) of an upwardly open trough (40) of cover (28), the upper und lower boundaries of the passage gap (42) having approximately the same size or same diameter, whilst having the same spacing throughout.

9. Grass cutter according to claim 8, characterized in that on the top of cutter head (16) are arranged fan blades (43) which, together with the space defined bythe guard plate (38) and the trough edge (41), as well es optionally together with the rotating cutting wire (18), form an air feed pump, the air passing out of the passage gap (42).

**Revendications**

1. Tondeuse à gazon ou appareil analogue avec un fil de coupe rotatif (18), dans lequel une tête de coupe (16) présentant un bobineau (17) sur lequel est enroulé un fil de coupe (18) peut être entraînée par un entraînement rotatif, l'extrémité externe du fil de coupe (18) tournant librement conjointement à la tête de coupe (16) et un couvercle (28) étant monté à la face inférieure, caractérisé par le fait que le couvercle (28) est fixé à pivotement, latéralement à l'extérieur de la circonférence décrite par le fil et fait légèrement saillie au-delà de la tête de coupe (16) en direction du côté opposé de la fixation.

2. Tondeuse à gazon selon la revendication 1, caractérisée par le fait que le couvercle (28) présente à sa face supérieure un support (33) qui est situé en regard d'une partie de soutien (21) formée par une pièce métallique dure, se trouvant dans le prolongement axial du centre de la tête de coupe (16) ent réalisée pour conférer un appui.

3. Tondeuse à gazon selon la revendication 2, caractérisée par le fait que le support (33) comporte une pièce insérée en une matière résistant à l'usure.

4. Tondeuse à gazon selon l'une des revendications précédentes, caractérisée par le fait que le couvercle (28) est fixé par une charnière à axe horizontal.

5. Tondeuse à gazon selon la revendication 4, caractérisée par le fait que le couvercle (28) présente une butée qui limite son aptitude à pivoter dans la position de fonctionnement dans laquelle il est maintenu en place par encliquetage.

6. Tondeuse à gazon selon l'une des revendications précédentes, caractérisée par le fait que le face inférieure du couvercle (28) a une surface (31) sensiblement plane, éventuellement profilée à la manière d'un patin, avec des arrondis latéraux, qui forme de préférence, avec le plan délimité par le fil de coupe (18) tournant librement, un angle ($\alpha$) d'environ 5 à environ 10°.

7. Tondeuse à gazon selon l'une des revendications précédentes, aves un dispositif de poursuite de connexion pouvant être actionné par pression exercée sur la tête de coupe (16) en vue d'allonger le fil de coupe (18), caractérisée par le fait qu'elle renferme une plaque (37) de pression au pied éventuellement revêtue de caoutchouc.

8. Tondeuse à gazon selon la revendication 7, caractérisée par le fait que la délimitation supérieure de l'intervalle de passage (42) formé entre le boîtier (11) et le couvercle (28) est formée par un tablier (38) de préférence en forme de cylindre droit et entourant concentriquement la tête de coupe (16) et sa délimitation inférieure est formée par le bord (41), de préférence circulaire, d'une cuvette (40) du couvercle (28) ouverte vers le haut, les délimitations supérieure et inférieure de l'intervalle de passage (42) présentant sensiblement les mêmes dimensions ou le même diamètre et étant partout séparées l'une de l'autre par sensiblement la même distance.

9. Tondeuse à gazon selon la revendication 8, caractérisée par le fait que, à la face supérieure de la tête de coupe (16), sont disposées des ailettes de ventilation (43) qui forment une pompe de refoulement d'air conjointement à l'espace délimité par le tablier (38) et le bord (41) de la cuvette et, le cas échéant, conjointement au fil de coupe rotatif (18), l'air sortant de l'intervalle de passage (42).

FIG. 1

FIG.2